# EUROPÄISCHE PATENTSCHRIFT

(11) **EP 3 336 254 B1**
(45) Veröffentlichungstag und Bekanntmachung des Hinweises auf die Patenterteilung: **28.08.2019**
(21) Anmeldenummer: 17205859.6
(22) Anmeldetag: 07.12.2017
(51) Int. Cl.: E01C 23/00, E01C 23/088, B62D 55/00, B62D 55/065, B62D 55/084

(54) **BAUMASCHINE UND VERFAHREN ZUM ÜBERFÜHREN EINER BAUMASCHINE FÜR DIE BEARBEITUNG VON EINEM BODENBELAG**
CONSTRUCTION MACHINE AND METHOD OF CONVERTING A CONSTRUCTION MACHINE FOR PROCESSING A FLOOR COVERING
ENGIN DE CONSTRUCTION ET PROCÉDÉ DE CONVERSION DE L'ENGIN DE CONSTRUCTION POUR L'USINAGE D'UN REVÊTEMENT DE SOL

(30) Priorität: 15.12.2016 DE 102016225189
(43) Veröffentlichungstag der Anmeldung: 20.06.2018
(73) Patentinhaber: Wirtgen GmbH, 53578 Windhagen (DE)
(72) Erfinder: Barimani, Cyrus, 53639 Königswinter (DE); Hofrath, Sebastian, 53773 Hennef (DE); Krämer, Philipp, 53545 Linz (DE)
(74) Vertreter: dompatent von Kreisler Selting Werner - Partnerschaft von Patent- und Rechtsanwälten mbB

(56) Entgegenhaltungen:
- EP-A1- 1 924 746
- EP-A1- 2 698 475
- EP-A1- 2 886 719
- EP-A2- 2 011 921

## Beschreibung

Die Erfindung betrifft eine Baumachine nach dem Oberbegriff des Anspruchs 1 sowie ein Verfahren zum Überführen einer Baumaschine für die Bearbeitung von einem Bodenbelag in eine Wartungsposition nach dem Oberbegriff des Anspruchs 14.

Gemäß der DE 10 2014 019 168 A1 sind Baumaschinen für die Bearbeitung von einem Bodenbelag bekannt. Solche Baumaschinen weisen üblicherweise einen Maschinenrahmen, mindestens eine Hubsäule und mindestens eine Fahreinrichtung auf, wobei die mindestens eine Hubsäule mit dem Maschinenrahmen verbunden ist. Mit Hilfe der Hubsäule kann der Maschinenrahmen relativ zum Bodenbelag höhenverstellbar sein, wobei die Hubsäule ein Säulenelement und ein Führungselement aufweist, wobei bei der Höhenverstellung der Hubsäule das Säulenelement teleskopartig in das Führungselement ein- und ausführbar ist.

EP 2 698 475 A1 offenbart eine selbstfahrende Baumaschine, insbesondere Straßenfräsmaschine oder Surface-Miner, die über einen Maschinenrahmen und ein Fahrwerkverfügt, das auf dem Boden aufstehende Laufwerk aufweist. Die Baumaschine weist Messeinrichtungen auf, die Mittel zum Messen der von der Baumaschine auf mindestens eines der Laufwerke ausgeübten Aufstandskraft aufweist.

Die EP 1 924 746 offenbart eine selbstfahrende Baumaschine, mit einem von einem Fahrwerk getragenen Maschinenrahmen und einer an dem Maschinenrahmen ortsfest und/oder verschwenkbar gelagerten Arbeitswalze zum Bearbeiten einer Boden- und/oder Verkehrsfläche. Das Fahrwerk hat Räder und/oder Kettenlaufwerke, die über Hubsäulen mit dem Maschinenrahmen verbunden sind und jeweils zu dem Maschinenrahmen höhenverstellbar sind. Jede einzelne höhenverstellbare Hubsäule weist eine Messeinrichtung zum Messen des aktuellen Hubzustandes der Hubsäule auf.

Die EP 2 011 921 A2 offenbart eine selbstfahrende Straßenfräsmaschine mit einem eine Vorderachse und eine Hinterachse aufweisenden Fahrwerk aus Kettenlaufwerken oder Räder, einem von dem Fahrwerk getragenen Maschinenrahmen mit seitlichen Außenwänden und einer Längsmittelachse einer an dem Maschinenrahmen gelagerten Fräswalze.

EP 2 886 719 A1 offenbart eine Straßenfräsmaschine mit einer Fräswalze, die mit einer Vielzahl von Meißeln bestückt ist.

Bei einer Wartung der Baumaschine muss die Baumaschine gegen unbeabsichtigtes Absacken der Baumaschine z.B. aufgrund einer Fehlfunktion der Hubzylinder gesichert werden. Dafür werden häufig einfache Stützen verwendet, die zwischen der Fahreinrichtung und dem Maschinenrahmen festgeklemmt werden. Diese Stützen müssen immer an der Baumaschine mitgeführt werden, damit Wartungsarbeiten jederzeit durchgeführt werden können.

Es besteht zunehmend Bedarf, eine solche Sicherung zu vereinfachen.

Aufgabe der vorliegenden Erfindung ist es daher, eine Baumaschine und ein Verfahren für die Bearbeitung von einem Bodenbelag zu schaffen, bei dem die Sicherung der Baumaschine bei Wartungsarbeiten vereinfacht wird.

Zur Lösung dieser Aufgabe dienen die Merkmale der Ansprüche 1 und 14.

Die Erfindung sieht in vorteilhafter Weise vor, dass an dem Säulenelement eine Aufnahme vorgesehen ist, in die ein Verriegelungselement derart einführbar ist, dass das Verriegelungselement im eingeführten Zustand zumindest teilweise gegenüber dem Säulenelement hervorsteht.

Das Verriegelungselement kann die Relativbewegung zwischen Säulenelement und Führungselement wenigstens in eine Richtung begrenzen. Auf diese Weise kann ein unbeabsichtigtes Absacken der des Maschinenrahmens verhindert werden, da das Verriegelungselement ein unbeabsichtigtes Absacken der Hubsäule begrenzt.

Das Säulenelement kann zylinderförmig ausgebildet sein, insbesondere ein Hohlzylinder sein.

Die Höhenverstellung der Hubsäule kann über eine Kolbenzylindereinheit, insbesondere einen Hydraulikzylinder erfolgen.

Das Verriegelungselement kann ein Bolzenelement sein. Dies ist ein im Vergleich zu den im Stand der Technik verwendeten Stützen recht kleines Bauteil, das einfach zu handhaben ist.

Die Aufnahme in dem Säulenelement kann eine Bohrung in dem Säulenelement sein.

Das zylinderförmige Säulenelement kann eine Zylinderachse aufweisen und die Bohrung kann im Wesentlichen senkrecht zur Zylinderachse verlaufen. Die Bohrung kann dabei die Wand des Säulenelements teilweise oder vollständig durchdringen.

Die Bohrung kann eine durch den gesamten Zylinder verlaufende durchgehende Bohrung sein und mit einem Abstand zu der Zylinderachse verlaufen.

Das Verriegelungselement kann ein Stangenelement sein, das in die durchgehende Bohrung derart einführbar ist, dass das Stangenelement an zwei Stellen gegenüber dem Säulenelement übersteht.

Es können mehrere Aufnahmen an dem Säulenelement vorgesehen sein, in die jeweils ein Verriegelungselement einführbar ist.

Das Verriegelungselement kann ein Sicherungselement aufweisen, das beim Einführen in die Aufnahme klemmbar ist und so ein Verrutschen des Verriegelungselements gegenüber dem Säulenelement im eingeführten Zustand verhindert.

Das Sicherungselement kann ein O-Ring sein.

Das Verriegelungselement kann eine stufenförmige Ausnehmung aufweisen, die eine Auflagefläche aufweist.

Bei Wartungsarbeiten kann zunächst das Verriegelungselement in das Säulenelement eingeführt werden und dann das Führungselement relativ zum Säulenelement derart verstellt werden, dass das Führungselement auf der stufenförmigen Ausnehmung auf der Auflagefläche aufliegt. Auf diese Weise ist das Verriegelungselement zusätzlich gegen ein Verrutschen gesichert.

Es kann ein Aufbewahrungsbehälter vorgesehen sein, der vorzugsweise am Maschinenrahmen angeordnet ist, in dem das mindestens eine Verriegelungselement aufgenommen werden kann.

Der Aufbewahrungsbehälter kann ein Schaltelement aufweisen, das eine Inbetriebnahme der Baumaschine erst ermöglicht, wenn das Schaltelement betätigt worden ist. Vorzugsweise wird das Schaltelement betätigt, wenn das mindestens eine Verriegelungselement in dem Aufbewahrungsbehälter aufgenommen ist. Die Inbetriebnahme der Baumaschine kann also erst erfolgen, wenn sich das Verriegelungselement im Aufbewahrungsbehälter befindet.

Werden mehrere Verriegelungselemente verwendet können diese entweder in einem Aufbewahrungsbehälter oder in getrennten Aufbewahrungsbehältern aufgenommen werden. Bei der Nutzung eines Aufbewahrungsbehälters wird das Schaltelement vorzugsweise erst betätigt, wenn alle Verriegelungselemente in dem Aufbewahrungsbehälter aufgenommen sind. Ist für jedes Verriegelungselement ein separater Aufbewahrungsbehälter vorgesehen, so wird die Inbetriebnahme der Baumaschine vorzugsweise erst ermöglicht, wenn die Schaltelemente aller Aufbewahrungsbehälter betätigt werden. Auf diese Weise kann sichergestellt werden, dass die Baumaschine erst wieder in Betrieb genommen wird, wenn alle Verriegelungselemente aus der Hubsäule entfernt worden sind.

Gemäß der vorliegenden Erfindung kann ferner ein Verfahren zum Überführen einer Baumaschine für die Bearbeitung von einem Bodenbelag in einer Wartungsposition vorgesehen sein, das die folgenden Schritte aufweist:
- Höhenverstellung mindestens einer Hubsäule der Baumaschine, wobei bei der Höhenverstellung der Hubsäule der Maschinenrahmen relativ zum Bodenbelag bewegt wird, und
- wobei bei der Höhenverstellung der Hubsäule ein Säulenelement der Hubsäule teleskopartig in ein Führungselement der Hubsäule ein- und/oder ausgeführt wird.

Es ist in vorteilhafter Weise vorgesehen, dass bei der Höhenverstellung der Hubsäule der Maschinenrahmen in eine erste Wartungsposition bewegt wird, wobei bei oder nach Erreichen der ersten Wartungsposition ein Verriegelungselement in einer Aufnahme des Säulenelements derart eingeführt wird, dass das Verriegelungselement im eingeführten Zustand zumindest teilweise gegenüber dem Säulenelement hervorsteht und eine weitere Höhenverstellung der Hubsäule zumindest in eine Richtung begrenzt.

Nach dem Einführen des Verriegelungselementes kann die Hubsäule derart höhenverstellt werden, dass der Maschinenrahmen gegenüber der ersten Wartungsposition in eine zweite Wartungsposition abgesenkt wird, wobei in der zweiten Wartungsposition das Führungselement zumindest teilweise auf dem Verriegelungselement aufliegt.

Im Folgenden werden unter Bezugnahme auf die Zeichnungen Ausführungsbeispiele der Erfindung näher erläutert.

Es zeigen schematisch:
- Fig. 1: eine Baumaschine,
- Fig. 2: eine Hubsäule der Baumaschine mit Verriegelungselement,
- Fig. 3: eine Detailansicht der Hubsäule aus Fig. 2 mit Verriegelungselement,
- Fig. 4: das Verriegelungselement gemäß Fig. 3 mit zusätzlicher Sicherung,
- Fig. 5: ein alternatives Ausführungsbeispiel,
- Fig. 6: ein weiteres alternatives Ausführungsbeispiel,
- Fig. 7: einen Aufbewahrungsbehälter mit Verriegelungselementen;
- Fig. 8: einen Aufbewahrungsbehälter gemäß Fig. 7 mit einem fehlendem Verriegelungselement.

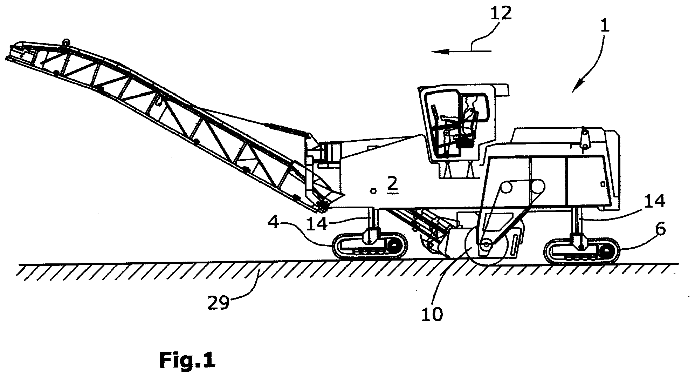

In Fig. 1 ist eine Baumaschine 1 für die Bearbeitung von einem Bodenbelag 29 dargestellt. Die dargestellte Baumaschine ist im vorliegenden Ausführungsbeispiel eine Fräsmaschine.

Die Baumaschine 1 weist zumindest einen Maschinenrahmen 2 auf. Die Baumaschine 1 weist ferner in Arbeitsrichtung 12 vordere und hintere Fahreinrichtungen 4, 6 auf. Die Fahreinrichtungen 4, 6 können Räder oder Kettenlaufwerke sein. Die Fahreinrichtungen 4, 6 sind über Hubsäulen 14 mit dem Maschinenrahmen 2 verbunden. Mit Hilfe der Hubsäulen 14 kann der Maschinenrahmen relativ zum Bodenbelag höhenverstellbar sein. Die im dargestellten Ausführungsbeispiel als Fräsmaschine ausgebildete Baumaschine 1 weist ferner eine Fräswalze 10 zum Bearbeiten des Bodenbelags 29 auf, wobei die Fräswalze 10 zusammen mit dem Maschinenrahmen 2 höhenverstellbar ist. Alternativ oder zusätzlich kann die Fräswalze relativ zum Maschinenrahmen höhenverstellbar sein. Die Fräswalze 10 wird von einer Antriebseinheit angetrieben. Die Antriebseinheit ist vorzugsweise ein Antriebsmotor, insbesondere ein Verbrennungsmotor.

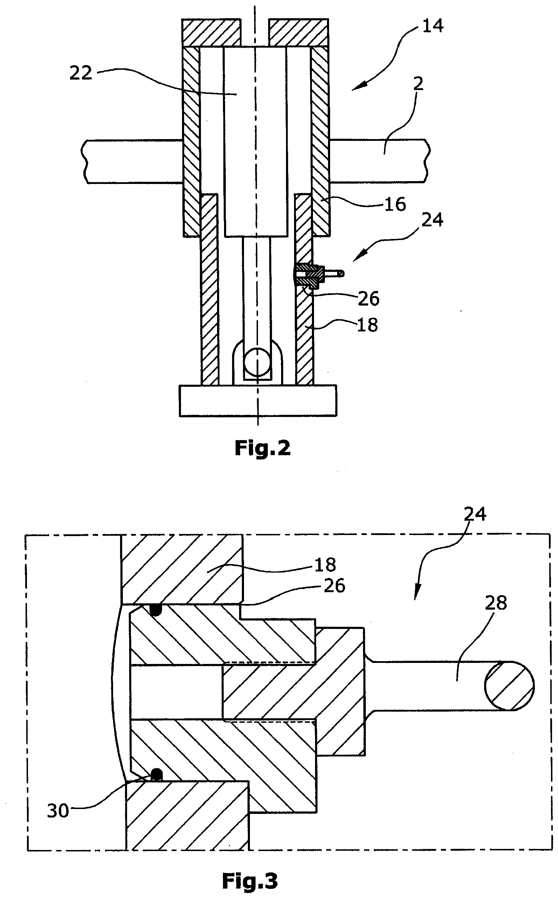

In Fig. 2 ist eine Hubsäule 14 schematisch dargestellt. Die Hubsäule 14 ist mit dem Maschinenrahmen 2 verbunden. Ferner ist die Hubsäule 14 mit der Fahreinrichtung 4, 6 verbunden, wobei in Fig. 2 nur ein Abschnitt der Fahreinrichtung 4, 6 dargestellt ist. Die Hubsäule 14 weist ein Säulenelement 18 und ein Führungselement 16 auf, wobei bei der Höhenverstellung der Hubsäule 14 das Säulenelement 18 mittels einer Kolben-Zylindereinheit 22 teleskopartig in das Führungselement ein- und ausführbar ist.

In dem Säulenelement 18 ist eine Aufnahme 26 vorgesehen, in die ein Verriegelungselement 24 derart eingeführt ist, dass das Verriegelungselement 24 im dargestellten eingeführten Zustand zumindest teilweise gegenüber dem Säulenelement 18 nach außen hervorsteht.

In Fig. 3 ist ein Abschnitt der Hubsäule 14 mit dem Verriegelungselement 24 näher dargestellt. Die Aufnahme 26 in dem Säulenelement 18 kann, wie im dargestellten Ausführungsbeispiel, eine Bohrung sein. Das Verriegelungselement 24 kann, wie im dargestellten Ausführungsbeispiel, ein Bolzenelement sein. Das Verriegelungselement 24 kann ein Sicherungselement 30 aufweisen, das beim Einführen in die Aufnahme 26 klemmbar ist und so ein Verrutschen des Verriegelungselements 24 gegenüber dem Säulenelement 18 im eingeführten Zustand verhindert. Das dargestellte Sicherungselement kann ein O-Ring sein. Dieser ist in einer umlaufenden Nut am Verriegelungselement 24 angeordnet. Der O-Ring steht vorzugsweise gegenüber dem Verriegelungselement 24 vor und wird beim Einführen eingeklemmt. Auf diese Weise wird ein Verrutschen des Verriegelungselements 24 gegenüber dem Säulenelement 18 im eingeführten Zustand verhindert.

Das Verriegelungselement 24 weist ferner ein Ringelement 28 auf. Mit Hilfe dieses Ringelementes 28 kann das Verriegelungselement 24 besser aus der Aufnahme 26 herausgezogen werden und/oder auch besser eingeführt werden. Verriegelungselement 24 und Ringelement 28 können aus einem Stück gefertigt, oder wie dargestellt aus unterschiedlichen Elementen zusammengefügt sein.

Die Baumaschine 1 kann in eine erste Wartungsposition überführt werden. Dafür erfolgt eine Höhenverstellung der mindestens einen Hubsäule 14 der Baumaschine 1, wobei bei der Höhenverstellung der Hubsäule 14 der Maschinenrahmen 2 relativ zum Bodenbelag 29 bewegt wird. Bei der Höhenverstellung der Hubsäule 14 wird das Säulenelement 18 der Hubsäule 14 teleskopartig in das in Fig. 2 dargestellte Führungselement 16 der Hubsäule 14 ein- oder ausgeführt. Die Hubsäule kann den Maschinenrahmen 2 beispielsweise durch ausfahren der Kolben-Zylindereinheit 22 und Abwärtsbewegung des Säulenelements 18 relativ zum Führungselement 16 der Hubsäule in eine erste Wartungsposition bewegen. Aufgrund der auf dem Bodenbelag 29 aufstehenden Fahreinrichtung 4,6 wird durch die Relativbewegung von Säulenelement 18 zu Führungselement 16 der Maschinenrahmen 2 relativ zum Bodenbelag angehoben. Bei Erreichen oder nach Erreichen der ersten Wartungsposition wird das Verriegelungselement 24 in die Aufnahme 26 des Säulenelementes 18 derart eingeführt, dass das Verriegelungselement im eingeführten Zustand zumindest teilweise gegenüber dem Säulenelement 18 hervorsteht und eine weitere Höhenverstellung der Hubsäule 14 zumindest in eine Richtung begrenzt.

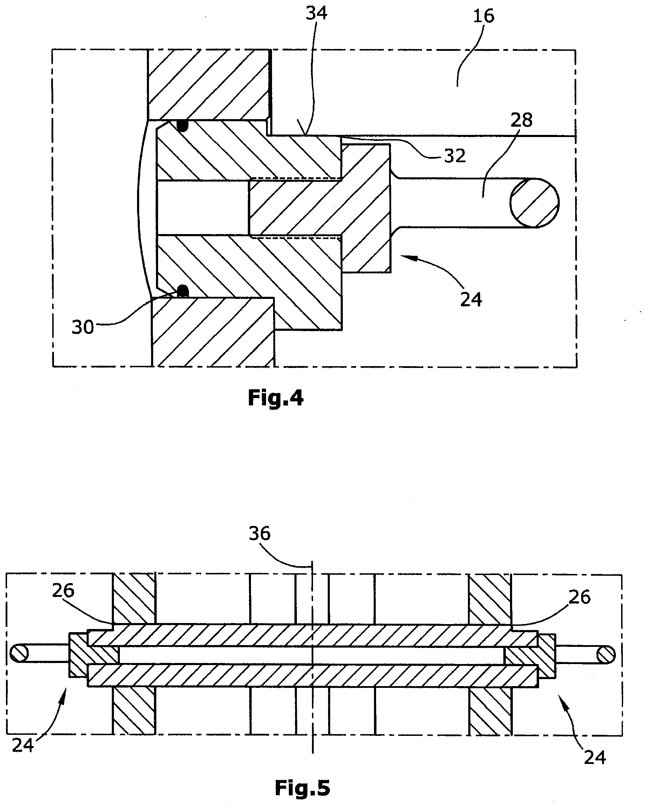

In Fig. 4 ist dargestellt, wie das Verriegelungselement 24 eine weitere Höhenverstellung der Hubsäule 14 in zumindest eine Richtung begrenzt. Das Führungselement 16 schlägt gegen den hervorstehenden Teil des Verriegelungselements 24 an. Auf diese Weise wird ein Absacken des Maschinenrahmens 2 über das Verriegelungselement hinaus bei einer Wartung verhindert. Wie in Fig. 4 dargestellt ist, kann das Verriegelungselement 24 eine stufenförmige Ausnehmung 32 aufweisen, die eine Auflagefläche 34 aufweist. Wie in Fig. 4 dargestellt ist, liegt das Führungselement 16 auf der Auflagefläche 34 auf.

Es kann vorgesehen sein, dass der Maschinenrahmen 2 zunächst in eine erste Wartungsposition verfahren wird, in der das Verriegelungselement 24, wie beschrieben, in die Aufnahme 26 des Säulenelementes 18 eingeführt wird. Dann kann die Hubsäule 14 in der Höhe verstellt werden, so dass der Maschinenrahmen gegenüber der ersten Wartungsposition in eine zweite Wartungsposition abgesenkt wird, wobei in der zweiten Wartungsposition das Führungselement 16, wie in Fig. 4 dargestellt, auf der Auflagefläche 34 des Verriegelungselementes 24 aufliegt. Dadurch dass eine stufenförmige Ausnehmung 32 vorgesehen ist, sichert das Aufliegen des Führungselementes 16 zusätzlich das Herausrutschen des Verriegelungselementes 24, da das Führungselement 16 zumindest teilweise vor zumindest einem Teil des Verriegelungselementes 24, das in der Aufnahme 26 eingeführt ist, liegt, so dass in diesem Zustand das Verriegelungselement 24 nicht aus der Aufnahme 26 gezogen werden kann.

Das Säulenelement kann, wie dargestellt, zylinderförmig ausgebildet und vorzugsweise ein Hohlzylinder sein. Die Höhenverstellung der Hubsäule 14 kann über eine Kolbenzylindereinheit 22, insbesondere einen Hydraulikzylinder erfolgen. Das Säulenelement 18 weist vorzugsweise eine Zylinderachse 36 auf. Die als Bohrung ausgebildete Aufnahme 26 verläuft im Wesentlichen senkrecht zur Zylinderachse 36. Die als Bohrung ausgebildete Aufnahme 26 ist im dargestellten Ausführungsbeispiel gemäß Fig. 5 eine durchgehende Bohrung durch das gesamte Säulenelement 18. Die durchgehende Bohrung verläuft mit einem Abstand zur Zylinderachse 36. Das Verriegelungselement 24 kann ein Stangenelement sein, wie es in Fig. 5 dargestellt ist. Dieses Stangenelement kann in die durchgehende Bohrung derart eingeführt sein, dass das Stangenelement an zwei Stellen gegenüber dem Säulenelement 18 übersteht.

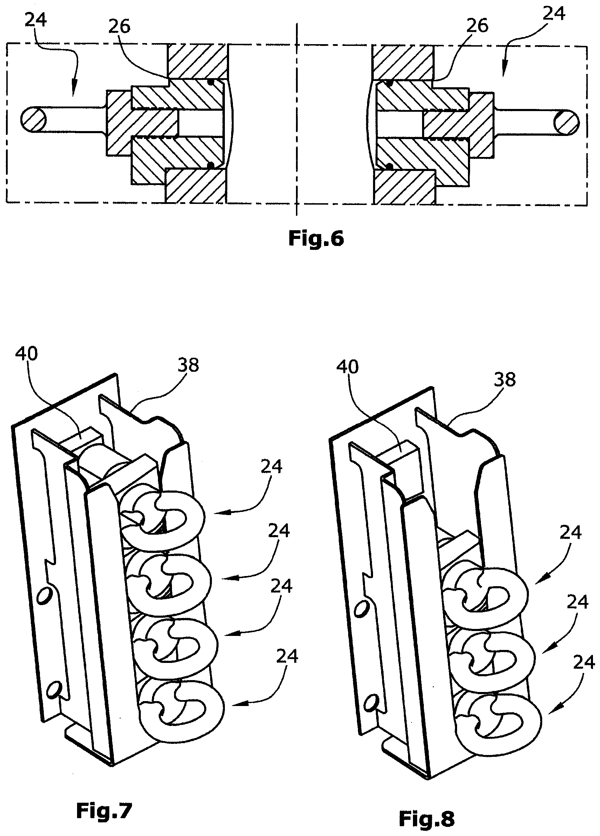

In Fig. 6 ist ein weiteres alternatives Ausführungsbeispiel dargestellt, bei dem an dem Säulenelement 18 mehrere Aufnahmen 26 vorgesehen sind, in die jeweils ein Verriegelungselement 24 eingeführt ist. Es versteht sich, dass die Aufnahmen 26 auch in vertikalem Abstand zueinander vorgesehen sein können. Auf diese Weise können die Verriegelungselemente an dem Säulenelement auf unterschiedlichen Höhen relativ zum Bodenbelag 29 angebracht werden. Somit kann die Begrenzung der Höhenverstellung an unterschiedliche Wartungsaufgaben angepasst erfolgen.

In Fig. 7 ist ein Aufbewahrungsbehälter 38 dargestellt. Dieser ist vorzugsweise am Maschinenrahmen 2 angeordnet. In den Aufnahmebehälter 38 kann zumindest ein Verriegelungselement 24 einsteckbar sein. Im dargestellten Ausführungsbeispiel können mehrere Verriegelungselemente 24 in den Aufbewahrungsbehälter 38 eingesteckt werden. Der Aufbewahrungsbehälter 38 weist ein Schaltelement 40 auf, das eine Inbetriebnahme der Baumaschine 1 erst ermöglicht, wenn das Schaltelement 40 betätigt worden ist. Dies erfolgt erst, wenn alle Verriegelungselemente 24 in den Aufbewahrungsbehälter 38 eingeführt werden.

In Fig. 8 ist ein Ausführungsbeispiel dargestellt, bei dem ein Verriegelungselement entfernt worden ist. In diesem Fall würde das Schaltelement 40 verhindern, dass die Baumaschine 1 in Betrieb genommen werden kann.

## Patentansprüche

1. Baumaschine (1) für die Bearbeitung von einem Bodenbelag (29), mit
- einem Maschinenrahmen (2),
- mindestens eine Hubsäule (14),
- mindestens einer Fahreinrichtung (4,6), die über die mindestens eine Hubsäule (14) mit dem Maschinenrahmen (2) verbunden ist, wobei mit Hilfe der Hubsäule (14) der Maschinenrahmen (2) relativ zum Bodenbelag (29) höhenverstellbar ist,
- wobei die Hubsäule (14) ein Säulenelement (18) und ein Führungselement (16) aufweist, wobei bei der Höhenverstellung der Hubsäule (14) das Säulenelement (18) teleskopartig in das Führungselement (16) ein- und ausführbar ist,
**dadurch gekennzeichnet,**
**dass** an dem Säulenelement (18) eine Aufnahme (26) vorgesehen ist, in die ein Verriegelungselement (24) derart einführbar ist, dass das Verriegelungselement (24) im eingeführten Zustand zumindest teilweise gegenüber dem Säulenelement (18) hervorsteht.

2. Baumaschine (1) nach Anspruch 1, **dadurch gekennzeichnet, dass** das Verriegelungselement (24) die Relativbewegung zwischen Säulenelement (18) und Führungselement (16) wenigstens in eine Richtung begrenzt.

3. Baumaschine (1) nach Anspruch 1 oder 2, **dadurch gekennzeichnet, dass** das Säulenelement (18) zylinderförmig ausgebildet ist, insbesondere ein Hohlzylinder ist.

4. Baumaschine (1) nach einem der Ansprüche 1 bis 3, **dadurch gekennzeichnet, dass** die Höhenverstellung der Hubsäule (14) über eine Kolben-Zylindereinheit (22), insbesondere Hydraulikzylinder erfolgt.

5. Baumaschine (1) nach einem der Ansprüche 1 bis 4, **dadurch gekennzeichnet, dass** das Verriegelungselement (24) ein Bolzenelement ist.

6. Baumaschine (1) nach einem der Ansprüche 1 bis 5, **dadurch gekennzeichnet, dass** die Aufnahme eine Bohrung in dem Säulenelement (18) ist.

7. Baumaschine (1) nach Anspruch 6, **dadurch gekennzeichnet, dass** das zylinderförmige Säulenelement (18) eine Zylinderachse (36) aufweist und die Bohrung im Wesentlichen senkrecht zur Zylinderachse (36) verläuft.

8. Baumaschine (1) nach einem der Ansprüche 1 bis 7, **dadurch gekennzeichnet, dass** mehrere zueinander beabstandete Aufnahmen (26) an dem Säulenelement (18) vorgesehen sind, in die Verriegelungselemente (24) einführbar sind.

9. Baumaschine (1) nach einem der Ansprüche 1 bis 8, **dadurch gekennzeichnet, dass** das Verriegelungselement (24) ein Sicherungselement (30) aufweist, dass beim Einführen in die Aufnahme klemmbar ist und so ein Verrutschen des Verriegelungselement (24) gegenüber dem Säulenelement (18) im eingeführten Zustand verhindert.

10. Baumaschine (1) nach einem der Ansprüche 1 bis 9, **dadurch gekennzeichnet, dass** das Verriegelungselement (24) eine stufenförmige Ausnehmung (32) aufweist, die eine Auflagefläche (34) aufweist.

11. Baumaschine (1) nach einem der Ansprüche 1 bis 10, **dadurch gekennzeichnet, dass** ein Aufbewahrungsbehälter (38), vorzugsweise am Maschinenrahmen (2), vorgesehen ist, in den das mindestens eine Verriegelungselement (24) einsteckbar ist.

12. Baumaschine (1) nach Anspruch 11, **dadurch gekennzeichnet, dass** der Aufbewahrungsbehälter (38) ein Schaltelement (40) aufweist, das eine Inbetriebnahme der Baumaschine (1) erst ermöglicht, wenn das Schaltelement (40) betätigt worden ist.

13. Baumaschine (1) nach Anspruch 12, **dadurch gekennzeichnet, dass** das Schaltelement (40) betätigbar ist, wenn in dem Aufbewahrungsbehälter (38) eine vorbestimmte Anzahl an Verriegelungselementen (24) vorhanden sind.

14. Verfahren zum Überführen einer Baumaschine (1) für die Bearbeitung von einem Bodenbelag (29) in eine Wartungsposition,
- Höhenverstellung mindestens einer Hubsäule (14) der Baumaschine (1), wobei bei der Höhenverstellung der Hubsäule (14) der Maschinenrahmen (2) relativ zum Bodenbelag (29) bewegt wird, und
- wobei bei der Höhenverstellung der Hubsäule (14) ein Säulenelement (18) der Hubsäule (14) teleskopartig in ein Führungselement (16) der Hubsäule (14) ein- und/oder ausgeführt wird,
**dadurch gekennzeichnet,**
**dass** bei der Höhenverstellung der Hubsäule (14) der Maschinenrahmen (2) in eine erste Wartungsposition bewegt wird, wobei bei oder nach Erreichen der ersten Wartungsposition ein Verriegelungselement (34) in eine Aufnahme (26) des Säulenelements (18) derart eingeführt wird, dass das Verriegelungselement (24) im eingeführten Zustand zumindest teilweise gegenüber dem Säulenelement (18) hervorsteht und eine weitere Höhenverstellung der Hubsäule (14) zumindest in eine Richtung begrenzt.

15. Verfahren nach Anspruch 14, **dadurch gekennzeichnet, dass** nach dem Einführen des Verriegelungselements (24) die Hubsäule (14) derart höhenverstellt wird, dass der Maschinenrahmen (2) gegenüber der ersten Wartungsposition in eine zweite Wartungsposition abgesenkt wird, wobei in der zweiten Wartungsposition das Führungselement (16) zumindest teilweise auf dem Verriegelungselement (24) aufliegt.

## Claims

1. Construction machine (1) for working a ground pavement (29), comprising
- a machine frame (2),
- at least one lifting column (14),
- at least one travelling device (4, 6) which is connected to the machine frame (2) via the at least one lifting column (14), where the machine frame (2) is adjustable in height relative to the ground pavement (29) by means of the lifting column (14),
- where the lifting column (14) comprises a column element (18) and a guiding element (16), where, during height adjustment of the lifting column (14), the column element (18) is guidable into and out of the guiding element (16) in a telescoping manner,
**characterized in that**
a mount (26) is provided at the column element (18) into which a locking element (24) is insertable in such a way that the locking element (24), in the inserted condition, projects, at least in part, vis-à-vis the column element (18).

2. Construction machine (1) in accordance with claim 1, **characterized in that** the locking element (24) limits, at least in one direction, the relative movement between the column element (18) and the guiding element (16).

3. Construction machine (1) in accordance with claim 1 or 2, **characterized in that** the column element (18) is designed in the shape of a cylinder, specifically, is a hollow cylinder.

4. Construction machine (1) in accordance with one of the claims 1 to 3, **characterized in that** the height adjustment of the lifting column (14) is effected via a piston-cylinder unit (22), specifically, hydraulic cylinder.

5. Construction machine (1) in accordance with one of the claims 1 to 4, **characterized in that** the locking element (24) is a bolt element.

6. Construction machine (1) in accordance with one of the claims 1 to 5, **characterized in that** the mount is a bore in the column element (18).

7. Construction machine (1) in accordance with claim 6, **characterized in that** the cylindrical column element (18) comprises a cylinder axis (36), and the bore extends essentially vertically to the cylinder axis (36).

8. Construction machine (1) in accordance with one of the claims 1 to 7, **characterized in that** a plurality of mounts (26) arranged at a distance to one another is provided at the column element (18) into which locking elements (24) are insertable.

9. Construction machine (1) in accordance with one of the claims 1 to 8, **characterized in that** the locking element (24) comprises a securing element (30) which is clampable during insertion into the mount and thus prevents slipping of the locking element (24) vis-à-vis the column element (18) in the inserted condition.

10. Construction machine (1) in accordance with one of the claims 1 to 9, **characterized in that** the locking element (24) comprises a step-shaped recess (32) which comprises a supporting surface (34).

11. Construction machine (1) in accordance with one of the claims 1 to 10, **characterized in that** a storage container (38) is provided, preferably at the machine frame (2), into which the at least one locking element (24) is insertable.

12. Construction machine (1) in accordance with claim 11, **characterized in that** the storage container (38) comprises a switching element (40) which allows the construction machine (1) to be put into operation only when the switching element (40) has been operated.

13. Construction machine (1) in accordance with claim 12, **characterized in that** the switching element (40) is operable when a predetermined number of locking elements (24) is provided in the storage container (38).

14. Method for transferring a construction machine (1) for working a ground pavement (29) into a maintenance position,
- height adjustment of at least one lifting column (14) of the construction machine (1), where, during height adjustment of the lifting column (14), the machine frame (2) is moved relative to the ground pavement (29), and
- where, during height adjustment of the lifting column (14), a column element (18) of the lifting column (14) is guided into and/or out of a guiding element (16) of the lifting column (14) in a telescoping manner,
**characterized in that**
during height adjustment of the lifting column (14), the machine frame (2) is moved into a first maintenance position, where, upon or after reaching the first maintenance position, a locking element (34) is inserted into a mount (26) of the column element (18) in such a way that the locking element (24), in the inserted condition, projects, at least in part, vis-à-vis the column element (18) and limits, at least in one direction, a further height adjustment of the lifting column (14).

15. Method in accordance with claim 14, **characterized in that**, after insertion of the locking element (24), the lifting column (14) is adjusted in height in such a way that the machine frame (2) is lowered, compared with the first maintenance position, into a second maintenance position, where, in the second maintenance position, the guiding element (16) is at least in part supported on the locking element (24).

## Revendications

1. Machine de chantier (1) destinée au traitement d'un revêtement de sol (29), avec
- un châssis de machine (2),
- au moins une colonne de levage (14),
- au moins un dispositif de roulage (4, 6) qui est raccordé au châssis de machine (2) par le biais de la colonne de levage (14) au moins au nombre de un, le châssis de machine (2) étant réglable en hauteur relativement au revêtement de sol (29) à l'aide de la colonne de levage (14),
- la colonne de levage (14) comportant un élément de colonne (18) et un élément de guidage (16), l'élément de colonne (18) pouvant effectuer un mouvement télescopique d'entrée et de sortie dans l'élément de guidage (16) lors du réglage en hauteur de la colonne de levage (14),
**caractérisée en ce que**,
sur l'élément de colonne (18), il est prévu un logement (26) dans lequel un élément de verrouillage (24) peut être introduit de telle sorte que l'élément de verrouillage (24) dépasse au moins partiellement de l'élément de colonne (18) dans l'état introduit.

2. Machine de chantier (1) selon la revendication 1, **caractérisée en ce que** l'élément de verrouillage (24) limite au moins dans une direction le mouvement relatif entre l'élément de colonne (18) et l'élément de guidage (16).

3. Machine de chantier (1) selon la revendication 1 ou 2, **caractérisée en ce que** l'élément de colonne (18) est de forme cylindrique, en particulier un cylindre creux.

4. Machine de chantier (1) selon l'une des revendications 1 à 3, **caractérisée en ce que** le réglage en hauteur de la colonne de levage (14) s'effectue par le biais d'une unité piston-cylindre (22), en particulier d'un cylindre hydraulique.

5. Machine de chantier (1) selon l'une des revendications 1 à 4, **caractérisée en ce que** l'élément de verrouillage (24) est un élément de boulon.

6. Machine de chantier (1) selon l'une des revendications 1 à 5, **caractérisée en ce que** le logement est un alésage dans l'élément de colonne (18).

7. Machine de chantier (1) selon la revendication 6, **caractérisée en ce que** l'élément de colonne (18) de forme cylindrique comporte un axe de cylindre (36) et l'alésage est essentiellement perpendiculaire à l'axe de cylindre (36).

8. Machine de chantier (1) selon l'une des revendications 1 à 7, **caractérisée en ce que** sur l'élément de colonne (18) il est prévu plusieurs logements (26) espacés les uns des autres dans lesquels peuvent être introduits des éléments de verrouillage (24).

9. Machine de chantier (1) selon l'une des revendications 1 à 8, **caractérisée en ce que** l'élément de verrouillage (24) comporte un élément de blocage (30) qui peut être serré lors de l'introduction dans le logement et empêche ainsi un glissement de l'élément de verrouillage (24) par rapport à l'élément de colonne (18) dans l'état introduit.

10. Machine de chantier (1) selon l'une des revendications 1 à 9, **caractérisée en ce que** l'élément de verrouillage (24) comporte un évidement (32) étagé qui comporte une surface d'appui (34)

11. Machine de chantier (1) selon l'une des revendications 1 à 10, **caractérisée en ce qu'**il est prévu, de préférence sur le châssis de machine (2), un conteneur de stockage (38) dans lequel l'élément de verrouillage (24) au moins au nombre de un peut être enfiché.

12. Machine de chantier (1) selon la revendication 11, **caractérisée en ce que** le conteneur de stockage (38) comporte un élément de commutation (40) qui ne permet une mise en marche de la machine de chantier (1) que quand l'élément de commutation (40) a été actionné.

13. Machine de chantier (1) selon la revendication 12, **caractérisée en ce que** l'élément de commutation (40) peut être actionné quand un nombre prédéfini d'éléments de verrouillage (24) sont présents dans le conteneur de stockage (38).

14. Procédé destiné à transférer dans une position de maintenance une machine de chantier (1) pour le traitement d'un revêtement de sol (29),
- comprenant le réglage en hauteur d'au moins une colonne de levage (14) de la machine de chantier (1), le châssis de machine (2) étant déplacé relativement au revêtement de sol (29) lors du réglage en hauteur de la colonne de levage (14), et
- un élément de colonne (18) de la colonne de levage (14) effectuant, lors du réglage en hauteur de la colonne de levage (14), un mouvement télescopique d'entrée et de sortie dans un élément de guidage (16) de la colonne de levage (14),
**caractérisé en ce que**,
lors du réglage en hauteur de la colonne de levage (14), le châssis de machine (2) est déplacé dans une première position de maintenance, un élément de verrouillage (34) étant, lorsque la première position de maintenance est atteinte ou après qu'elle ait été atteinte, introduit dans un logement (26) de l'élément de colonne (18) de telle sorte que l'élément de verrouillage (24), dans la position introduite, dépasse au moins partiellement de l'élément de colonne (18) et limite au moins dans une direction une poursuite du réglage en hauteur de la colonne de levage (14).

15. Procédé selon la revendication 14, **caractérisé en ce que**, après l'introduction de l'élément de verrouillage (24), la colonne de levage (14) est réglée en hauteur de telle sorte que le châssis de machine (2) est, par rapport à la première position de maintenance, abaissé dans une deuxième position de maintenance l'élément de guidage (16) reposant, dans la deuxième position de maintenance, au moins partiellement sur l'élément de verrouillage (24).
